(19) Europäisches Patentamt
European Patent Office
Office européen des brevets

(11) **EP 3 955 186 A1**

(12) **EUROPÄISCHE PATENTANMELDUNG**

(43) Veröffentlichungstag:
**16.02.2022 Patentblatt 2022/07**

(21) Anmeldenummer: **20190571.8**

(22) Anmeldetag: **11.08.2020**

(51) Internationale Patentklassifikation (IPC):
**G06Q 10/06** *(2012.01)*

(52) Gemeinsame Patentklassifikation (CPC):
**G06Q 10/0635**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Klein, Wolfram**
**85579 Neubiberg (DE)**
• **Rothbauer, Stefan**
**86156 Augsburg (DE)**
• **Wehrstedt, Jan Christoph**
**81829 München (DE)**

(54) **BESTIMMUNG KRITISCHER PRODUKTIONSSCHRITTE FÜR DIE FLEXIBLE PRODUKTFERTIGUNG**

(57) Die Erfindung betrifft ein Verfahren zur Produktionsplanung, bei dem eine Gesamtbewertungsgröße (RIS-ges) für einen Produktionsablauf vorliegt, wobei der Produktionsablauf eine Mehrzahl von Produktionsschritten umfasst. Aus der Gesamtbewertungsgröße (RIS-ges) werden Einzelbewertungsgrößen (RIS-calc) für die Produktionsschritte ermittelt. Vor der Ermittlung werden zumindest einem Teil der zu ermittelnden Einzelbewertungsgrößen (RIS-calc) Wertebereiche zugeordnet, innerhalb welcher die jeweilige Einzelbewertungsgröße (RIS-calc) als Ergebnis der Ermittlung liegen soll. Weiterhin betrifft die Erfindung hierzu korrespondierend eine Vorrichtung oder ein System zur Datenverarbeitung, ein Computerprogramm, einen computerlesbaren Datenträger, sowie ein Datenträgersignal.

EP 3 955 186 A1

Fig. 2

Printed by Jouve, 75001 PARIS (FR)

**Beschreibung**

Die Erfindung betrifft ein Verfahren zur Produktionsplanung, bei dem aus einer Gesamtbewertungsgröße für einen eine Mehrzahl von Produktionsschritten umfassenden Produktionsablauf Einzelbewertungsgrößen dieser Produktionsschritte ermittelt werden.

In großen komplexen Produktionsanlagen ist oft unklar, welche Maschinen bzw. welche Produktionsschritte zu der finalen Produktqualität in welchem Ausmaß beitragen, welche Maschine oder welcher Produktionsschritt am kritischsten ist, und welche Tests am besten durchgeführt werden sollten, um einerseits eine stabile Qualität bei andererseits geringem Testaufwand zu erhalten. Wenn dieses Wissen vorhanden wäre, dann könnte der gesamte Produktionsablauf und somit die Entscheidung, welche Maschinen und Produktionsschritte für die Produktfertigung sinnvollerweise anzuwenden sind, besser geplant werden. Auch könnte die Produktionszeit für eine zu erzielende Qualität, die Menge der benötigten Eingangsmaterialien, der Energieverbrauch der Produktion, und sogar Maßnahmen zur Modernisierung oder Wartung besser prognostiziert und geplant werden.

Der Erfindung liegt die Aufgabe zugrunde, ein verbessertes Verfahren zur Produktionsplanung aufzuzeigen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechender computerlesbarer Datenträger, und ein entsprechendes Datenträgersignal. Vorteilhafte Ausgestaltungen und Weiterbildungen sind Gegenstand von Unteransprüchen.

Das erfindungsgemäße Verfahren dient der Produktionsplanung. Als Eingangsgröße liegt eine Gesamtbewertungsgröße für einen Produktionsablauf vor. Dieser Produktionsablauf umfasst eine Mehrzahl von Produktionsschritten. Aus der Gesamtbewertungsgröße werden Einzelbewertungsgrößen für die Produktionsschritte ermittelt. Hierbei werden vor dieser Einzelbewertungsgrößen-Ermittlung zumindest einem Teil der zu ermittelnden Einzelbewertungsgrößen Wertebereiche zugeordnet, innerhalb welcher die jeweilige Einzelbewertungsgröße als Ergebnis der Ermittlung liegen soll.

Es wird ein bestimmter Produktionsablauf betrachtet. Für diesen Produktionsablauf wird für jeden Produktionsschritt eine oder mehrere Einzelbewertungsgrößen ermittelt. Ziel dieses Vorgehens ist es, die ermittelten Einzelbewertungsgrößen für die Produktionsplanung heranzuziehen. Bei der Produktionsplanung wird entschieden, welche Produktionsschritte auf welcher Maschine durchzuführen sind, um ein bestimmtes Produkt zu fertigen.

Die Ermittlung der Einzelbewertungsgrößen basiert auf der Kenntnis einer Gesamtbewertungsgröße des Produktionsablaufs. Diese ist vorzugsweise durch Analyse eines oder mehrerer mit dem Produktionsablauf gefertigter Produkte erhalten worden. Alternativ hierzu ist es aber auch möglich, eine durch Rechnung oder andersartig erhaltene Größe als Gesamtbewertungsgröße zu verwenden. Die Gesamtbewertungsgröße gibt die Güte des Produktionsablaufs an; sie kann die finale Qualität des Produktes, oder auch Produktionszeit oder -kosten, abbilden. Entsprechendes gilt für die Einzelbewertungsgrößen in Bezug auf die einzelnen Produktionsschritte. Kennt man die Einzelbewertungsgrößen der Produktionsschritte, so lässt sich die Gesamtbewertungsgröße des jeweiligen Produktionsablaufs bestimmen.

Vor der Ermittlung der Einzelbewertungsgrößen aus der Gesamtbewertungsgröße werden Wertebereiche definiert und manchen oder allen der Einzelbewertungsgrößen zugeordnet. Diese Zuordnung bedeutet, dass der ermittelte Wert für die jeweilige Einzelbewertungsgröße innerhalb des Wertebereichs liegen muss.

Ferner ist es vorteilhaft, vor der Ermittlung zumindest einem Teil der zu ermittelnden Einzelbewertungsgrößen einzelne Werte zuzuordnen. Diese Zuordnung bedeutet, dass der ermittelte Wert für die jeweilige Einzelbewertungsgröße genau dem zugeordneten einzelnen Wert entsprechen muss. In diesem Fall liegt also eine oder mehrere Einzelbewertungsgrößen vor, welchen ein Wertebereich zugeordnet ist, und eine oder mehrere Einzelbewertungsgrößen, welchen ein einzelner Wert zugeordnet ist.

Zusätzlich zu den Wertebereichen können den zu ermittelnden Einzelbewertungsgrößen Wahrscheinlichkeitsverteilungen zugeordnet werden bezüglich der Verteilung der Einzelbewertungsgrößen innerhalb der Wertebereiche. Eine solche Verteilung gibt an, mit welcher Wahrscheinlichkeit eine Einzelbewertungsgröße die Werte des jeweiligen Wertebereichs annimmt. Findet eine mehrfache Ermittlung der Einzelbewertungsgrößen statt, müssen die Ergebnisse gemäß der Wahrscheinlichkeitsverteilungen in den Wertebereichen verteilt sein.

Besonders bevorzugt ist es, wenn zur Ermittlung der Einzelbewertungsgrößen ein inverses Berechnungsverfahren angewandt wird. Bei der inversen Problemlösung können Randbedingungen derart verwendet werden, dass sich die Gesamtbewertungsgröße aus den ermittelten Einzelbewertungsgrößen zusammensetzt, und dass die ermittelten Einzelbewertungsgrößen innerhalb des jeweils zugeordneten Wertebereiches liegen. Hierdurch kann also vor der Ermittlung der Einzelbewertungsgrößen eine bestimmte Beziehung zwischen den Einzelbewertungsgrößen und der Gesamtbewertungsgröße gefordert werden, sowie durch die Wertebereiche Vorgaben zu den Lösungswerten gemacht werden. Die Beziehung zwischen den Einzelbewertungsgrößen und der Gesamtbewertungsgröße kann z.B. eine Summenbeziehung sein, d.h. die Summe der ermittelten Einzelbewertungsgrößen entspricht der Gesamtbewertungsgröße. Auch kann eine Randbedingung derart verwendet wird, dass die ermittelten Einzelbewertungsgrößen gemäß vorgegebener Wahrscheinlichkeitsverteilungen innerhalb der jeweiligen Wertebereiche verteilt sind. Hierfür können die bereits erläuterten Wahrscheinlichkeitsverteilungen zum Einsatz kommen.

In Weiterbildung der Erfindung wird zur Ermittlung der Einzelbewertungsgrößen ein simulatives Berechnungsverfahren angewandt. Bei diesem wird eine simulierte Gesamtbewertungsgröße berechnet, und die zu ermittelnden Einzelbewertungsgrößen werden variiert, um die simulierte Gesamtbewertungsgröße der Gesamtbewertungsgröße anzunähern. Hierfür eignen sich besonders Gradienten- und stochastische Verfahren.

Die inverse und die simulative Lösung können alternativ oder ergänzend zueinander eingesetzt werden. Ist letzteres der Fall, so können die mittels des inversen Berechnungsverfahrens ermittelten Einzelbewertungsgrößen mit den mittels des simulativen Berechnungsverfahrens ermittelten Einzelbewertungsgrößen verglichen werden. Dieser Vergleich kann insbesondere der Validierung der Ergebnisse dienen.

In Ausgestaltung der Erfindung stellt das Ergebnis der Ermittlung eine Gruppe von Lösungen dar, wobei jede Lösung Einzelbewertungsgrößen für die Produktionsschritte beinhaltet. Es erfolgt in diesem Fall eine mehrmalige Ermittlung der Einzelbewertungsgrößen. Bei vielen in Frage kommenden mathematischen Verfahren der inversen Problemlösung oder der Simulation führt dies zu unterschiedlichen Lösungen. Eine Verdichtung der unterschiedlichen Lösungen auf eine einzige Lösung kann z.B. durch Bildung von Mittelwert oder Median erfolgen. Vorteilhaft ist die Analyse der Ähnlichkeit verschiedener Lösungen; hierdurch können sinnvolle oder mit hoher Wahrscheinlichkeit zutreffende Lösungen erkannt werden. Auch eine Betrachtung der Verteilung der Lösungen, insbesondere deren Streubreite oder Varianz ist sinnvoll.

Einer Weiterbildung der Erfindung gemäß werden basierend auf den ermittelten Einzelbewertungsgrößen für zumindest einen Produktionsschritt Messungen vorgenommen und unter Einbeziehung des Messergebnisses erneut die Einzelbewertungsgrößen für die Produktionsschritte ermittelt. Es eignet sich besonders, einen oder mehrere Produktionsschritte mit schlechten Einzelbewertungsgrößen herauszugreifen und Tests oder Messungen zu unterziehen. Die Ergebnisse hiervon können dann z.B. als Werte oder Wertebereiche für die jeweilige Einzelbewertungsgröße vorgegeben werden, um hiermit eine erneute Ermittlung der Einzelbewertungsgrößen durchzuführen.

Nach erfolgter Ermittlung der Einzelbewertungsgrößen können diese der Produktionsplanung zugrunde gelegt und basierend auf der Produktionsplanung Produkte gefertigt werden. Bei der Produktionsplanung werden Entscheidungen über die Durchführung von Produktionsschritten auf Maschinen getroffen. Ferner können Prognosen hinsichtlich verschiedener Größen wie z.B. Zeit- und Materialaufwand getätigt werden.

Im Folgenden wird die Erfindung anhand eines Ausführungsbeispiels näher erläutert. Dabei zeigen:

Figur 1: eine Produktionsanlage,

Figur 2: einen Verfahrensablauf.

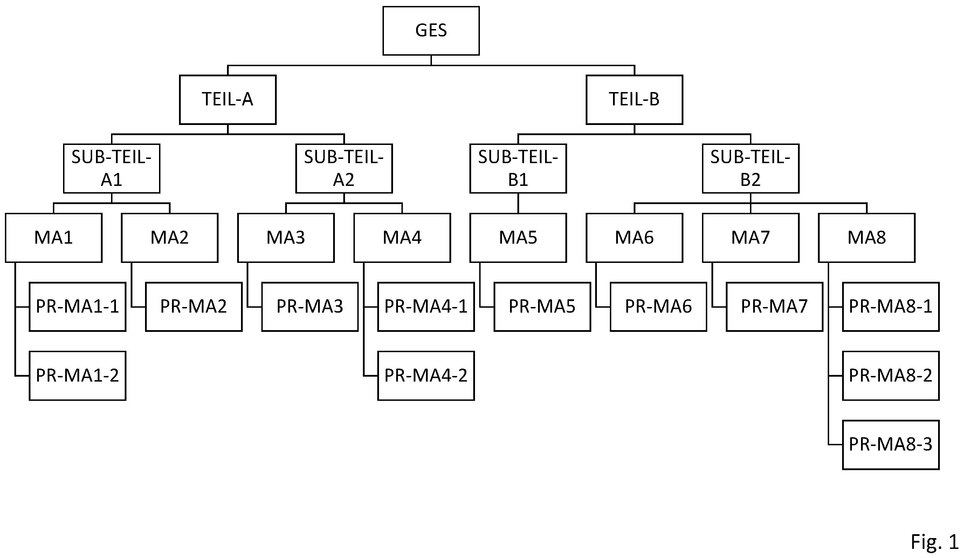

Mittels der in Figur 1 gezeigten komplexen Produktionsanlage GES können verschiedene Produkte hergestellt werden. Die gesamte Produktionsanlage GES ist in Teilanlagen hierarchisch über zwei Ebenen organisiert, sie umfasst hierzu zwei Teilanlagen TEIL-A und TEIL-B, wobei diese wiederum die Sub-Teilanlagen SUB-TEIL-A1 und SUB-TEIL-A2 bzw. SUB-TEIL-B1 und SUB-TEIL-B2 umfassen. Ferner gehören zu jeder Sub-Teilanlage eine oder mehrere Maschinen, und zwar zur Sub-Teilanlage SUB-TEIL-AI die Maschinen MA1 und MA2, zur Sub-Teilanlage SUB-TEIL-A2 die Maschinen MA3 und MA4, zur Sub-Teilanlage SUB-TEIL-B1 die Maschine MA5, zur Sub-Teilanlage SUB-TEIL-B2 die Maschinen MA6, MA7 und MA8. Auf jeder Maschine kann einer oder mehrere verschiedene Produktionsschritte ablaufen, und zwar auf der Maschine MA1 die Produktionsschritte PR-MA1-1 und PR-MA1-2, auf der Maschine MA2 der Produktionsschritt PR-MA2, auf der Maschine MA3 der Produktionsschritt PR-MA3, auf der Maschine MA4 die Produktionsschritte PR-MA4-1 und PR-MA4-2, auf der Maschine MA5 der Produktionsschritt PR-MA5, auf der Maschine MA6 der Produktionsschritt PR-MA6, auf der Maschine MA7 der Produktionsschritt PR-MA7, und auf der Maschine MA8 die Produktionsschritte PR-MA8-1, PR-MA8-2 und PR-MA8-3.

Selbstverständlich sind die in Figur 1 gezeigten Anzahlen an Teilanlagen, an Maschinen und Produktionsschritten beispielhaft; üblicherweise verfügen komplexen Produktionsanlagen über größere Anzahlen.

Zur Produktion eines bestimmten Produktes wird eine Teilmenge oder alle der Produktionsschritte PR-MA1-1, PR-MA1-2, PR-MA2, PR-MA3, PR-MA4-1, PR-MA4-2, PR-MA5, PR-MA6, PR-MA7, PR-MA8-1, PR-MA8-2, PR-MA8-3 in einer bestimmten Reihenfolge durchlaufen. Diese Reihenfolge oder Kontrollstrategie wird im Folgenden als Produktionsablauf bezeichnet. Hierbei ist es möglich, dass bestimmte Produktionsschritte auf verschiedenen Maschinen durchgeführt, diese Maschinen also alternativ eingesetzt werden können. Es handelt sich bei der Produktionsanlage also nicht um ein einfaches Förderband, bei dem alle Produkte die gleichen Produktionsschritte durchlaufen. Vielmehr sind autonome Transporteinheiten vorhanden, welche das in der Produktion befindliche Produkt von Maschine zu Maschine transportieren, so dass pro Produkt ein unterschiedlicher Produktionsablauf stattfinden kann.

Das im folgende beschriebene Vorgehen ist relevant für Produkte, die weitgehend automatisiert in Fertigungsstraßen produziert werden und Qualitätsziele haben. Dies trifft auf praktisch alle heutzutage in Fabriken gefertigten Produkte zu. Ein einfaches Beispiel wäre ein Schrank oder seine Bestandteile, wobei Wände und Regale für den Zusammenbau vorbereitet werden, indem diese mit mehreren Löchern in einer bestimmten Anordnung versehen werden.

Hierfür kann ein Maschinenplatz mit einer Bohrmaschine, aber auch zwei parallele Plätze vorgesehen sein, wobei der zweite Platz relativ zum ersten z.B. nicht nur Löcher bohren sondern auch noch stanzen kann, also gegenüber dem ersten eine erweiterte Funktionalität aufweist. Der Produktionsablauf kann daher vorsehen, dass die Löcher entweder von der ersten Maschine, also am ersten Maschinenplatz, oder von der zweiten Maschine gebohrt werden.

Für die Planung eines Produktionsablaufs ist es wichtig zu wissen, welche Auswirkung ein bestimmter Produktionsschritt auf einer bestimmten Maschine bezüglich der finalen Produktqualität hat. Wenn dieses Wissen vorhanden wäre, könnte die Auswahl der Produktionsschritte so bestimmt werden, dass eine bestimmte Mindestqualität für das Produkt erreicht wird. Auch die hierfür anfallenden Kosten und die Dauer der jeweiligen Produktion könnten dann genauer prognostiziert werden.

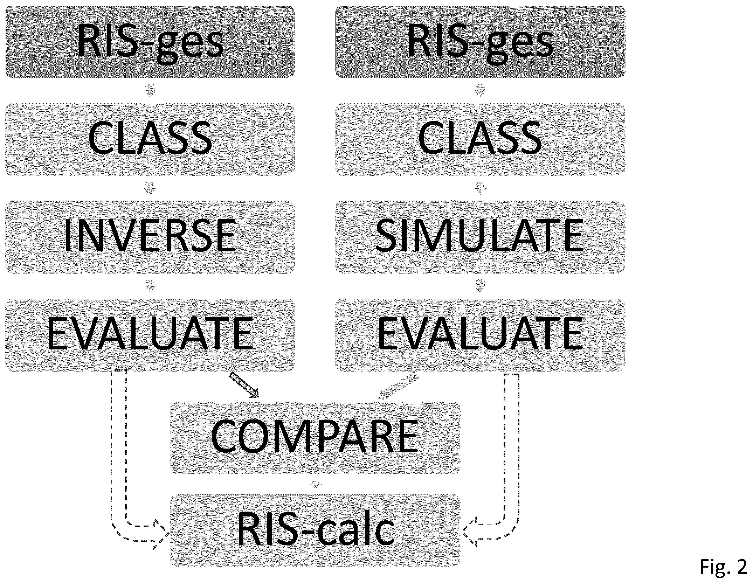

Das im Folgenden anhand von Figur 2 beschriebene Verfahren dient der besseren Qualitätsplanung eines Produktionsablaufs. Dies ist relevant insbesondere bezogen auf eine "Industrie 4.0 Fertigung" mit Hinsicht auf "Lot Size 1" bzw. Losgröße 1 Produktion, also der Sonderanfertigung von nur einzelnen Exemplaren eines Produktes, oder auch von sehr spezifischen Produkten. Üblicherweise sind nämlich bei einer "Lot Size 1" Produktion nicht genügend reale Daten vorhanden für die Beurteilung des Einflusses einzelner Produktionsschritte / Maschinen auf die finale Produktqualität.

Im folgenden wird davon ausgegangen, dass eine Gesamt-Risikobewertung eines bestimmten Produktionsablaufs bekannt ist. Diese Gesamt-Risikobewertung kann z.B. in zu erwartendem Schaden in Euro angegeben werden, oder auch als anderer numerischer Wert. Diese Gesamtbewertungsgröße kann auch als Gesamtfehler bezeichnet werden und berechnet sich als Summe der Risikobewertungen aller bei dem betrachteten Produktionsablauf durchlaufenen Produktionsschritte. Die Risikobewertungen eines einzelnen Produktionsschrittes auf einer bestimmten Maschine ist das Produkt aus der Eintrittswahrscheinlichkeit eines Schadens oder Fehlers bei diesem Produktionsschritt auf dieser Maschine und dem jeweils im Fehlerfall eintretenden Schadensausmaß. Bezogen auf das Produkt bezieht sich die Risikobewertung darauf, eine geforderte Produktqualität nicht ausreichend zu erreichen.

Es wird davon ausgegangen, dass für einen bestimmten Produktionsablauf die Gesamt-Risikobewertung RIS-ges dieses Produktionsablaufs bekannt ist. Dies ist insbesondere der Fall, wenn bereits mehrere Produkte mittels dieses Produktionsablaufs gefertigt wurden; in diesem Fall liegen valide statistische Aussagen hierzu vor.

Alternativ zum Vorliegen einer realen Gesamt-Risikobewertung RIS-ges eines Produktionsablaufs kann diese auch als Zielgröße im Sinne einer Qualitätsanforderung an ein Produkt gegeben sein. In diesem Fall liefert dann das im folgenden beschriebene Verfahren als Ergebnis Risikobewertungen, welche die Produktionsschritte erfüllen müssen, um dieser Zielvorgabe zu entsprechen.

Hieraus kann man zurückrechnen auf die Risikobewertungen aller durchlaufenen Produktionsschritte dieses Produktionsablaufs. Hierzu werden zunächst im Schritt CLASS drei Klassen pro Produktionsschritt und Maschine - diese Kombination von Produktionsschritt und Maschine wird im Folgenden mit i indiziert - bezüglich des Wissens von Werten für die Eintrittswahrscheinlichkeit $E(i)$ und das Schadensausmaß $S(i)$ für diesen konkreten Produktionsschritt auf der konkreten Maschine zugeordnet:

a. Wissensklasse 1: Der Operator, also der für den Betrieb der jeweiligen Maschine zuständige Mitarbeiter, kennt seine Maschine und den Produktionsschritt gut und kann zwei konkrete Werte $E(i)$ und $S(i)$ zuordnen.
b. Wissensklasse 2: Der Operator kennt seine Maschine und den Produktionsschritt nur ungefähr, kann aber zwei Intervalle $[E(i)_u, ..., E(i)_o]$ und $[S(i)_u, ..., S(i)_o]$ zuordnen, innerhalb derer sich die Eintrittswahrscheinlichkeit $E(i)$ und das Schadensausmaß $S(i)$ dieses Produktionsschrittes auf der Maschine befindet.
c. Wissensklasse 3: Der Operator hat keinerlei Erfahrung oder Wissen um seine Maschine oder den Produktionsschritt auf der Maschine und kann deshalb auch keinen Werte für Eintrittswahrscheinlichkeit $E(i)$ und Schadensausmaß $S(i)$ zuordnen.

In einem ersten Lösungsabschnitt INVERSE werden nun die Eintrittswahrscheinlichkeiten $E(i)$ und das Schadensausmaß $S(i)$ für alle Produktionsschritte des Produktionsablaufs mit der Gesamt-Risikobewertung RIS-ges mit Hilfe eines inversen Problems berechnet. Hierbei werden unter der Nebenbedingung, dass sich die bekannte Gesamt-Risikobewertung RIS-ges ergibt, die Größen $E(i)$ und $S(i)$ berechnet, für welche gilt:

```
RIS-ges = ∑ E(i)*S(i) = E(1)*S(1) + E(2)*S(2) + E(3)*S(3) +=…
```

Als weitere Nebenbedingung bei der Lösung des inversen Problems muss erfüllt sein, dass die als Lösung erhaltenen Werte $E(i)$, $S(i)$ für den jeweiligen Produktionsschritt der zugeordneten Klasse entsprechen. Dies bedeutet für:

a. Wissensklasse 1: die dem Operator bekannten Werte für $E(i)$ und $S(i)$ werden als Ergebnis ausgegeben.

b. Wissensklasse 2: die als Ergebnis erhaltenen Werte müssen aus den Wertebereichen $[E(i)_u, ..., E(i)_o]$ und $[S(i)_u, ..., S(i)_o]$ stammen. Als weitere Randbedingung können bestimmte Verteilungen innerhalb dieser Wertebereiche gefordert werden, wie z.B.

    o Mittelwert: über alle Lösungen betrachtet ergibt sich für die berechneten Werte $E(i)$, $S(i)$ der Mittelwert des jeweiligen Intervalls;

    o "normale" Wahrscheinlichkeitsverteilung: diese gibt an, mit welcher Wahrscheinlichkeit ein bestimmter Wert aus dem jeweiligen Intervall als Ergebnis ausgegeben wird; ein geeignetes Beispiel ist eine Gaußverteilung einer bestimmten Breite; je sicherer das Wissen über die Maschine und den Produktionsschritt ist, desto kleiner sollte die mittlere Breite der Gaußverteilung sein. Alternativ kann auch eine Gleichverteilung verwendet werden, d.h. jeder Wert tritt mit gleicher Wahrscheinlichkeit auf.

    o "extreme" Wahrscheinlichkeitsverteilung: auch diese gibt an, mit welcher Wahrscheinlichkeit ein bestimmter Wert aus dem jeweiligen Intervall als Ergebnis ausgegeben wird; im Gegensatz zur oben erläuterten "normalen" Wahrscheinlichkeitsverteilung sollen jedoch mit hoher Wahrscheinlichkeit die schlechtesten (worst case Szenario) und/oder besten (best case Szenario) Werte erreicht werden.

c. Wissensklasse 3: die als Ergebnis erhaltenen Werte müssen aus geschätzten Wertebereichen $[E(i)_u, ..., E(i)_o]$ und $[S(i)_u, ..., S(i)_o]$ stammen. Als weitere Randbedingung können dann die gleichen Verteilungen innerhalb dieser Wertebereiche gefordert werden wie zu Wissensklasse 2 beschrieben.

Mit den beschriebenen Randbedingungen wird nun das inverse Problem gelöst. Hierzu können an sich bekannte mathematische Verfahren angewandt, wie z.B. ein Gradientenverfahren oder ein stochastisches Verfahren.

Üblicherweise existieren mehrere Lösungen für das inverse Problem. Es wird daher eine Vielzahl von Lösungen bestimmt, wobei eine Lösung jeweils einem n-Tupel von Wertepaaren $E(i)$, $S(i)$ entspricht, mit n der Anzahl der Produktionsschritte. Da der mathematische Weg zur Lösung des inversen Problems derart ist, dass manche Werte $E(i)$, $S(i)$ gemäß obiger Klasseneinteilung vorgegeben werden, um hiermit die anderen Werte $E(i)$, $S(i)$ auszurechnen, kann vorgegeben werden, wie viele Lösungen berechnet werden sollen.

Diese Vielzahl von Lösungen kann nun im Schritt EVALUATE analysiert werden:

- Es kann untersucht werden, ob ein n-Tupel von Wertepaaren existiert, welches besonders häufig vorkommt. Dies kann dann als bestes Ergebnis RIS-calc ausgegeben werden.
- Entsprechendes gilt, wenn ein Gruppe von n-Tupeln von Wertepaaren existiert, bei denen die n-Tupel der Gruppe zueinander recht ähnliche Werte aufweisen.
- Wenn die Varianz, welche ein Maß für die Unterschiedlichkeit der Ergebnisse ist, mancher Werte $E(i)$, $S(i)$ innerhalb der Gruppe von berechneten Lösungen sehr groß ist, sind zwei Maßnahmen denkbar: einerseits kann die Anzahl der berechneten Lösungen erhöht werden. Zusätzlich oder alternativ können bei dem oder den betroffenen Produktionsschritten Tests oder Messungen durchgeführt werden, um mehr Informationen über diese Größen zu gewinnen. Dies bedeutet für die Wissensklassen 2 und 3, dass nach Durchführung der Messungen die Intervalle und/oder die Wahrscheinlichkeitsverteilungen geändert werden. Im Anschluss kann dann unter Einbeziehung der gewonnenen Informationen erneut das inverse Problem gelöst werden.
- Es kann, entweder unabhängig oder abhängig von der Varianz, eine genauere Betrachtung von Produktionsschritten mit "schlechten" Ergebnissen für $E(i)$, $S(i)$ durchgeführt werden. Da diese besonders kritisch für die Qualität des Produktes sind, kann versucht werden, in Bezug auf diese Produktionsschritte durch Tests oder Messungen verlässlichere Informationen zu gewinnen. Mit diesen neuen Werten kann dann erneut das inverse Problem gelöst werden.

Wie durch den gestrichelten Pfeil symbolisiert, kann im Anschluss an den Schritt EVALUATE das Ergebnis RIS-calc ausgegeben werden. Hierbei kann es sich um einen einzigen n-Tupel von Wertepaaren $E(i)$, $S(i)$ handeln. Dies ist vorzugsweise der am häufigsten in der Menge der Lösungen vorkommende n-Tupel, falls ein solcher existiert. Alternativ kann eine Lösung erzeugt und als Ergebnis RIS-calc ausgegeben werden, indem ein Mittelwert aus einer Gruppe von häufig vorkommenden ähnlichen n-Tupeln berechnet wird. Zur Bestimmung der Ähnlichkeit können an sich bekannte Metriken zur Bestimmung der Ähnlichkeit im n-dimensionalen Raum verwendet werden. Ferner kann eine Verdichtung der Lösungen auf ein einziges n-Tupel von Wertepaaren durch die Bildung von Mittelwert oder Median über alle Lösungen vorgenommen werden.

Ferner ist es möglich, nicht nur einen n-Tupel, sondern eine Gruppe von n-Tupeln als Ergebnis RIS-calc auszugeben. Diese Gruppe besteht wiederum vorzugsweise aus den am häufigsten erhaltenen Lösungen. Wenn nicht ein einziger n-Tupel, sondern eine Gruppe von n-Tupeln das Ergebnis RIS-calc bildet, hat dies den Vorteil, dass zumindest für manche der Werte $E(i)$, $S(i)$ ein Wertebereich vorliegt, an dessen Breite sich erkennen lässt, wie sicher die gewonnenen Zahlenwerte sind. Ein großer Wertebereich für eine Größe weist darauf hin, dass auch nach Durchführung des beschriebenen Verfahrens wenig zuverlässiges Wissen über diese Größe vorhanden ist.

Zusätzlich oder alternativ zum Schritt INVERSE können im Schritt SIMULATE aus dem bekannten Gesamtrisiko RIS-ges des betrachteten Produktionsablaufs n-Tupel von Wertepaaren E(i), S(i) berechnet werden. Hierbei wird anstelle der Lösung des inversen Problems ein simulativer Ansatz verfolgt. Dabei wird von der gleichen Klasseneinteilung der Produktionsschritte ausgegangen wie zuvor bereits beschrieben.

Es wird das simulierte Gesamtrisiko berechnet. Hierbei gilt: Gesamtrisiko simuliert = E(1)*S(1)+E(2)*S(2)+E(3)*S(3)+ ... Das simulierte Gesamtrisiko wird dann mit dem bekannten Gesamtrisiko RIS-ges verglichen. Iterativ wird derart vorgegangen, dass die Werte E(i), S(i) der zweiten und dritten Wissensklasse systematisch variiert werden, wodurch man in jeder Iteration der gesuchten Lösung näherkommt. Der Startwert für E(i), S(i) kann gemäß der oben beschriebenen Wahrscheinlichkeitsverteilungen gesetzt werden: es kann also der Mittelwert des Wertebereiches, oder der wahrscheinlichste Wert der "normalen" oder "extremen" Wahrscheinlichkeitsverteilung verwendet werden. Das iterative Vorgehen erfolgt solange, bis der Absolutwert der Differenz zwischen dem simulierten Gesamtrisiko und dem bekannten Gesamtrisiko RIS-ges minimal ist. Dies entspricht der Lösung eines Optimierungsproblems bezüglich der Variation der Werte der Prozessschritte der Wissensklassen 2 und 3. Dies erfolgt vorzugweise mittels eines Gradientenverfahrens, aber auch andere stochastische Verfahren sind möglich.

Bei einmaliger Anwendung des Simulationsverfahrens erhält man eine einzige Lösung in Form eines n-Tupels von Wertepaaren E(i), S(i). Bei mehrmaliger Anwendung erhält man verschiedene Lösungen, wenn der simulative Ansatz nicht vollkommen deterministisch ist. Letzteres ist bei vielen Verfahren der Fall, da es i.d.R. effizienter ist, stochastisch vorzugehen, dafür aber üblicherweise nicht dieselbe Lösung aufzufinden.

Die Auswertung der als Ergebnis erhaltenen n-Tupel kann genauso wie beim Schritt EVALUATE des Lösungsabschnittes INVERSE beschrieben erfolgen.

Werden beide Lösungsabschnitte INVERSE und SIMULATE durchgeführt, so können nun die Ergebnisse im nächsten Schritt COMPARE miteinander verglichen werden. Dieser Vergleich kann alternativ auch vor den jeweiligen Schritten EVALUATE stattfinden. Im Prinzip sollten beide Verfahren INVERSE und SIMULATE die gleichen oder ähnliche Ergebnisse hervorbringen, wenn die Intervalle bei den Klassen 2 und 3 sinnvoll bestimmt wurden.

Stimmen die bei den Lösungsabschnitten INVERSE und SIMULATE erhaltenen Ergebnisse genau oder in etwa überein, so kann davon ausgegangen werden, dass es sich um zuverlässige Werte handelt. Diese können dann als Ergebnis RIS-calc ausgegeben werden. Das Ergebnis RIS-calc kann, wie oben bereits erläutert, aus einem einzigen oder mehreren n-Tupeln von Wertepaaren S(i), E(i) bestehen. Sind hingegen große Unterschiede zwischen den durch die Lösungsabschnitte INVERSE und SIMULATE erhaltenen Lösungen vorhanden, so ist es sinnvoll, neu vor den Schritten CLASS zu starten. Hierfür können z.B. Tests oder Messungen durchgeführt werden, um Prozessschritte, welche zuvor in den Klassen 2 oder 3 waren, in Klasse 1 einordnen zu können, oder die Intervalle für die Klasse 2 besser einzugrenzen zu können, oder Prozessschritte von Klasse 3 in Klasse 2 überführen zu können. Hiernach wird das Verfahren bis einschließlich zum Schritt COMPARE und der Ausgabe des Ergebnisses RIS-calc erneut durchgeführt.

Liegen schließlich die endgültigen Ergebnisse RIS-calc für alle Wertepaare E(i) und S(i) vor, so kann diese Kenntnis zur Produktionsplanung herangezogen werden:

- Bezüglich der besonders kritischen Prozessschritte, d.h. bei denjenigen, welche gemäß dem Ergebnis RIS-calc einen großen Wert für das Produkt aus E(i) und S(i) aufweisen, kann überlegt werden, ob diese umgangen werden können. Dies wäre z.B. möglich durch Austausch der betroffenen Maschine, d.h. durch Durchführung des Prozessschrittes auf einer anderen Maschine, entweder auf einer bereits in der Produktionsanlage existierenden oder einer neu zu beschaffenden. Sollte es nicht realisierbar sein, diesen Prozessschritt zu umgehen, können geeignete Maßnahmen getroffen werden, wie z.B. eine häufigere oder intensivere Prüfung des hergestellten Produktes.

- Die besonders sicheren Prozessschritte, d.h. diejenigen, welche gemäß dem Ergebnis RIS-calc einen niedrigen Wert für das Produkt aus E(i) und S(i) aufweisen, sollten bevorzugt für die Produktion verwendet werden.
- Aus der Kenntnis aller Wertepaare E(i) und S(i) können Aussagen über die zu erwartende Produktionszeit gewonnen werden, einschließlich der für die Überprüfung und eventuellen Korrektur/Nachbearbeitung des Produktes, sowie über den hierfür erforderlichen Materialbedarf und den Energieverbrauch der Produktion.

Von Vorteil bei der beschriebenen Vorgehensweise ist, dass eine gute Qualität eines zu produzierenden Produktes erreicht werden kann, ohne dass viele Tests an Maschinen nötig sind. Dies wird erreicht, indem teilweise vorhandene Erfahrungen bzw. vorhandenes Wissen über die Qualität einzelner Produktionsschritte genutzt und mit geeigneten mathematischen Methoden kombiniert wird.

Das Verfahren kann auf einem Computer durchgeführt werden. Das hierauf laufende Programm fragt das Gesamtrisiko RIS-ges und die Anzahl der für diese Produktion mit dem Gesamtrisiko RIS-ges durchgeführten Prozessschritte ab, sowie die Klasseneinteilung, die bekannten Werte für die Prozessschritte der Klasse 1, und die Grenzen der Intervalle der Klassen 2 und 3. Ferner wird dem Nutzer die Möglichkeit gegeben, bei den Klassen 2 und 3 aus verschiedenen Wahrscheinlichkeitsverteilungen auszuwählen. Schließlich kann der Nutzer auswählen, ob nur eines der Verfahren gemäß dem INVERSE bzw. SIMULATE Ast der Figur 2 durchgeführt werden soll. Wenn dies der Fall ist, erhält der Nutzer nach Durchführung der Schritte INVERSE bzw. SIMULATE und EVALUATE schließlich das Ergebnis RIS-calc angezeigt. Ist die Anzeige eines Ergebnisses RIS-calc aufgrund stark unterschiedlicher oder breit verteilter Lösungen nicht möglich, wird dem Nutzer angezeigt, bei welchen Prozessschritten weitere Informationen benötigt werden. Entsprechendes gilt, wenn der Nutzer eingegeben hat, dass beide Verfahren gemäß der INVERSE und SIMULATE Äste durchgeführt werden sollen. Entweder erhält der Nutzer nach Durchführung des Schrittes COMPARE das Ergebnis RIS-calc angezeigt, oder es wird dem Nutzer angezeigt, bei welchen Prozessschritten weitere Informationen benötigt werden.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

**Patentansprüche**

1. Verfahren zur Produktionsplanung, bei dem eine Gesamtbewertungsgröße (RIS-ges) für einen Produktionsablauf vorliegt,
   wobei der Produktionsablauf eine Mehrzahl von Produktionsschritten umfasst,
   aus der Gesamtbewertungsgröße (RIS-ges) Einzelbewertungsgrößen (RIS-calc) für die Produktionsschritte ermittelt werden,
   wobei vor der Ermittlung zumindest einem Teil der zu ermittelnden Einzelbewertungsgrößen (RIS-calc) Wertebereiche zugeordnet werden, innerhalb welcher die jeweilige Einzelbewertungsgröße (RIS-calc) als Ergebnis der Ermittlung liegen soll.

2. Verfahren nach Anspruch 1, bei dem
   vor der Ermittlung zumindest einem Teil der zu ermittelnden Einzelbewertungsgrößen (RIS-calc) einzelne Werte zugeordnet werden.

3. Verfahren nach Anspruch 1 oder 2, bei dem zusätzlich zu den Wertebereichen den zu ermittelnden Einzelbewertungsgrößen (RIS-calc) Wahrscheinlichkeitsverteilungen zugeordnet werden bezüglich der Verteilung der Einzelbewertungsgrößen (RIS-calc) innerhalb der Wertebereiche.

4. Verfahren nach einem der Ansprüche 1 bis 3, bei dem zur Ermittlung der Einzelbewertungsgrößen (RIS-calc) ein inverses Berechnungsverfahren (INVERSE) angewandt wird.

5. Verfahren nach Anspruch 4, bei dem
   bei dem inversen Berechnungsverfahren (INVERSE) Randbedingungen derart verwendet werden, dass

   - sich die Gesamtbewertungsgröße (RIS-ges) aus den ermittelten Einzelbewertungsgrößen (RIS-calc) zusammensetzt,
   - die ermittelten Einzelbewertungsgrößen (RIS-calc) innerhalb des jeweils zugeordneten Wertebereiches liegen.

6. Verfahren nach Anspruch 4 oder 5, bei dem bei dem inversen Berechnungsverfahren (INVERSE) eine Randbedingung derart verwendet wird, dass

   - die ermittelten Einzelbewertungsgrößen (RIS-calc) gemäß vorgegebener Wahrscheinlichkeitsverteilungen innerhalb der jeweiligen Wertebereiche verteilt sind.

7. Verfahren nach einem der Ansprüche 1 bis 6, bei dem zur Ermittlung der Einzelbewertungsgrößen (RIS-calc) ein simulatives Berechnungsverfahren (SIMULATE) angewandt wird.

8. Verfahren nach Anspruch 7, bei dem
   bei dem simulativen Berechnungsverfahren (SIMULATE) eine simulierte Gesamtbewertungsgröße berechnet wird, und die zu ermittelnden Einzelbewertungsgrößen (RIS-calc) variiert werden, um die simulierte Gesamtbewertungsgröße der Gesamtbewertungsgröße (RIS-ges) anzunähern.

9. Verfahren nach einem der Ansprüche 4 bis 6 in Kombination mit einem der Ansprüche 7 bis 8, bei dem

die mittels des inversen Berechnungsverfahrens (INVERSE) ermittelten Einzelbewertungsgrößen (RIS-calc) mit den mittels des simulativen Berechnungsverfahrens (SIMULATE) ermittelten Einzelbewertungsgrößen (RIS-calc) verglichen werden.

10. Verfahren nach einem der Ansprüche 1 bis 9, bei dem
das Ergebnis der Ermittlung eine Gruppe von Lösungen darstellt, wobei jede Lösung Einzelbewertungsgrößen (RIS-calc) für die Produktionsschritte beinhaltet.

11. Verfahren nach einem der Ansprüche 1 bis 10, bei dem
basierend auf den ermittelten Einzelbewertungsgrößen (RIS-calc) für zumindest einen Produktionsschritt Messungen vorgenommen werden und unter Einbeziehung des Messergebnisses erneut die Einzelbewertungsgrößen (RIS-calc) für die Produktionsschritte ermittelt werden.

12. Verfahren nach einem der Ansprüche 1 bis 11, bei dem
unter Verwendung der ermittelten Einzelbewertungsgrößen (RIS-calc) eine Produktionsplanung erfolgt und zumindest ein Produkt gemäß der Produktionsplanung gefertigt wird.

13. Vorrichtung oder System zur Datenverarbeitung, umfassend
Mittel zur Ausführung des Verfahrens nach einem der Ansprüche 1 bis 12.

14. Computerprogramm, umfassend Befehle, die bei der Ausführung des Programms durch einen Computer diesen veranlassen, die Schritte des Verfahrens nach einem der Ansprüche 1 bis 12 auszuführen.

15. Computerlesbarer Datenträger, auf dem das Computerprogramm nach Anspruch 14 gespeichert ist.

16. Datenträgersignal, das das Computerprogramm nach Anspruch 14 überträgt.

Fig. 1

EP 3 955 186 A1

EP 3 955 186 A1

Fig. 2

**Europäisches Patentamt**
**European Patent Office**
**Office européen des brevets**

# EUROPÄISCHER RECHERCHENBERICHT

Nummer der Anmeldung

EP 20 19 0571

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MAURIZIO BEVILACQUA ET AL: "Digital Twin Reference Model Development to Prevent Operators' Risk in Process Plants", SUSTAINABILITY, Bd. 12, Nr. 3, 4. Februar 2020 (2020-02-04), Seite 1088, XP055738879, DOI: 10.3390/su12031088 * Zusammenfassung; Abbildung 1 * ----- | 1-16 | INV. G06Q10/06 |

RECHERCHIERTE SACHGEBIETE (IPC)

G06Q

Der vorliegende Recherchenbericht wurde für alle Patentansprüche erstellt

| Recherchenort | Abschlußdatum der Recherche | Prüfer |
|---|---|---|
| München | 12. Oktober 2020 | Liendl, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)